# EUROPEAN PATENT SPECIFICATION

(11) **EP 0 757 934 B1**
(45) Date of publication and mention of the grant of the patent: **17.05.2000**
(21) Application number: 96201799.2
(22) Date of filing: 28.06.1996
(51) Int. Cl.: B23Q 1/01

(54) **Machine-tool for performing machining operations on workpieces of undefined length such as sections and the like**
Werkzeugmaschine für Bearbeitungsvorgänge auf langgestreckten Werkstücken wie Profilen und dergleichen
Machine-outil pour effectuer des opérations d'usinage sur de pièces allongées tel que des sections et similaires

(30) Priority: 09.08.1995 IT MI951761
(43) Date of publication of application: 12.02.1997
(73) Proprietor: Zanotto,Ugo Cesare, Somma Lombardo (IT); Gatti,Laura, Somma Lombardo (IT)
(72) Inventor: Zanotto, Ugo Cesare, Somma Lombardo (IT); Marcorelli, Antonio, Olgiate Olona (IT)
(74) Representative: Raimondi, Alfredo, Dott. Ing. Prof.

(56) References cited:
- EP-A- 0 124 845
- FR-A- 2 159 777
- GB-A- 397 781

## Description

The present invention relates to a machine-tool for performing machining operations on workpieces of undefined length such as sections, bars and the like, having a working head and tool which can be respectively oriented in a direction parallel and perpendicular to the surface to be machined, whatever the inclination of the latter with respect to the direction of feeding of the workpiece towards the working head.

In the technical sector of machining operations it is known of the need to perform operations such as the milling and boring of workpieces of undefined length such as sections and bars of any kind used for different applications, e.g. the structural sections of door and window frames and/or fixtures, whether they be made of aluminium, wood or plastic.

The patent IT-1,242,551 also discloses a machine-tool with a head movable in a substantially horizontal feed direction forming the first axis of a set of three Cartesian axes, the second axis of which passes through the tool, whereby the tool is oriented so as to be kept always perpendicular to the surface to be machined.

This orientation, however, is not accompanied by a corresponding orientation of the plane containing the other two axes of said set of three Cartesian axes so that it is parallel to the surface to be machined; consequently, in the case of a workpiece with a cross-section which is not square, but having faces inclined with respect to the axes of said set of three axes, all the design values must be recalculated in accordance with angular projections, this involving a high-level calculation procedure which in the case of numerical-control machines means a complicated and hence costly calculation program, the alternative being that the workpiece must be repositioned each time a surface which is not parallel to the fixed reference plane of the machine is to be machined.

To the prior art also belongs the machine disclosed into FR-2.159.777, which is represented by the preamble of claim 1.

Said machine presents only two controlled axis and is adapted to work workpieces of defined length for which it is also requested to work the frontal face; to this purpose the workpiece can he also turned on the table.

The machine presents on the contrary some limitations in respect of the problem of working workpieces of indefinite length, it is in fact unable to bring the tool orthogonal to the lower surface of the piece, having no possibility to turn of 360° the working turret.

The technical problem which is posed, therefore, is that of providing a machine-tool in particular for performing the machining of parts of undefined length such as bars, sections and the like, in which, after defining a set of three Cartesian axes with at least one axis coinciding with the longitudinal axis of the tool and at least one axis parallel to the direction of feeding of the workpiece, it is possible to orient the tool in a direction perpendicular to the surface to be machined and, simultaneously and in a correlated and automatic manner, orient the plane containing the two axes perpendicular to the longitudinal axis of the tool in a direction such that the relative positioning of the working head with respect to the workpiece occurs in a direction parallel to the said surface to be machined, thus resulting in direct correspondence between the design values and the relative positioning of the tool/workpiece and consequently avoiding complicated and costly manual and/or automatic calculation procedures or repositioning of the workpiece each time a surface which is not parallel to the fixed reference plane of the machine is to be machined.

These results are obtained by the present invention, according to which a machine-tool is provided for the machining of parts of undefined length such as sections, bars and the like, comprising a fixed support having mounted on it the working head which consists of a surface perpendicular to the direction of feeding of the workpiece, on said surface being located guides on which means are displaceable, an arm carrying the tool, said working head being rotationally connected to the support by means of an element which are rotatable by associated actuating means, said element for rotationally connecting the head and said support being provided with associated openings for passage of the workpiece itself fed towards the working head by associated translating means acting in the said feeding direction, whereby a second arm is perpendicularly mounted on said displaceable means, said arm carrying the tool is perpendicularly mounted on said second arm and movable with respect thereto along both directions parallel and perpendicular to the feeding direction, the element is rotatable by 360° around the feeding direction, said combination allowing simultaneous and automatic orientation of the longitudinal axis of the tool and the axis of the said guides of the second movable arm respectively in the directions perpendicular and parallel to the surface to be machined, whatever the inclination of the latter with respect to the direction of feeding of the workpiece.

Further details can be obtained from the following description with reference to the. accompanying drawings, in which:
Figure 1 shows a front view of the machine according to the invention in the rest condition;
Figure 2 shows a side view of the machine according to Figure 1;

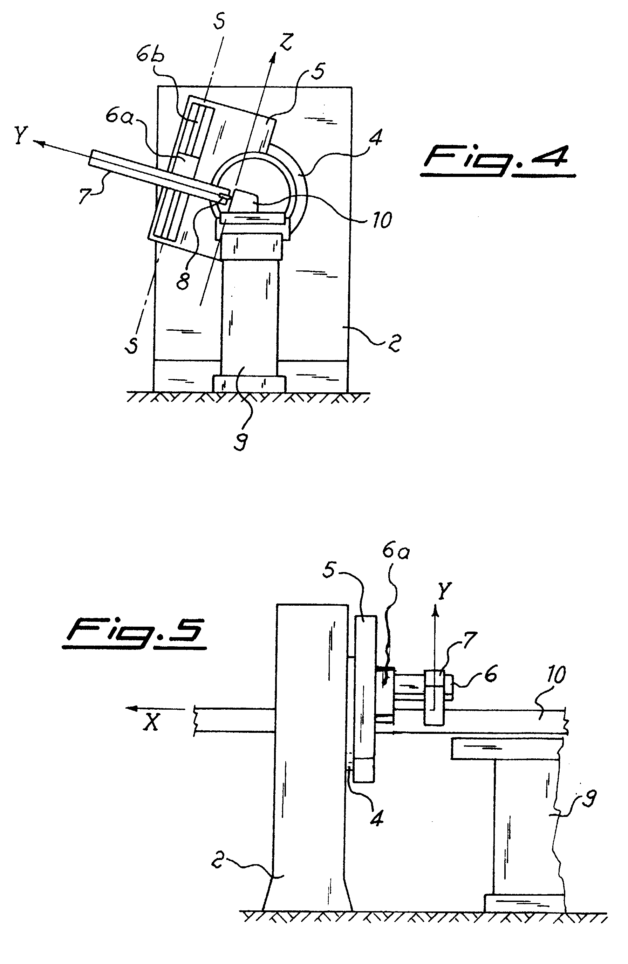

Figure 3 shows a front view of the machine according to Figure 1 with the head oriented along a first surface to be machined;
Figure 4 shows a front view of the machine with the head oriented along a further surface to be machined, and;
Figure 5 shows a side view of the machine according to Figure 4;

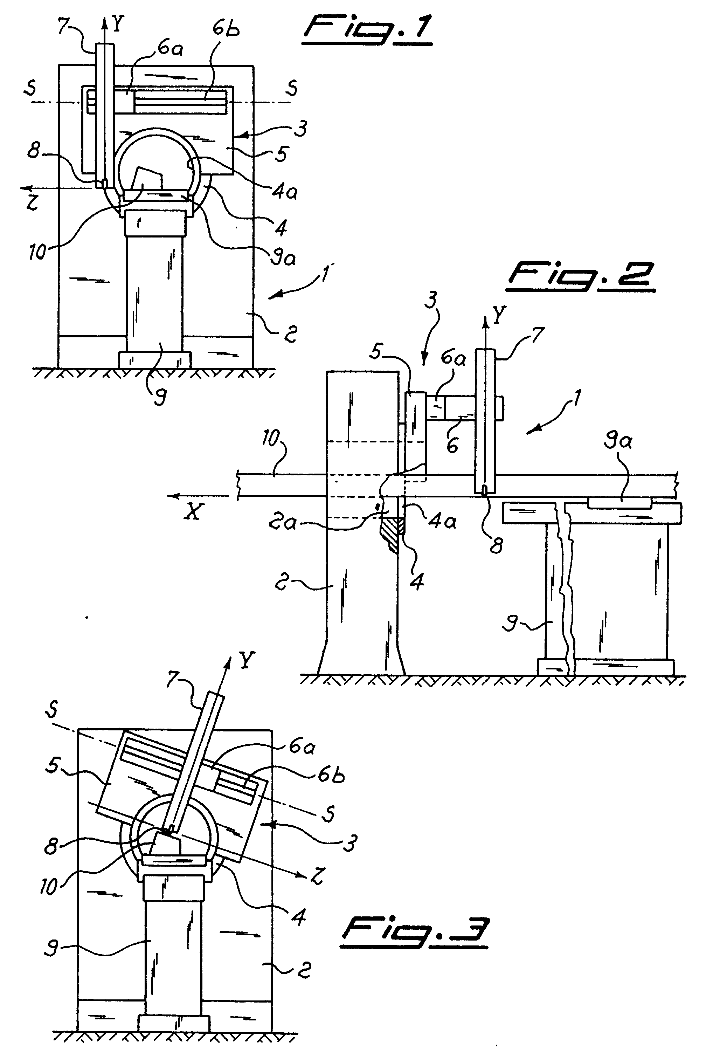

As shown in Figure 1, the machine according to the invention consists of a fixed support 2 perpendicular to a fixed reference plane which, in the example illustrated, is formed by the ground level.

Said base has rotationally connected to it a bearing ring 4 supporting the working head 3. More particularly, said bearing ring 4 is connected to a shaft of an engine (not shown) via which it is possible to cause rotation of the bearing ring itself and hence the entire working head 3 relative to the base 2 through angles of up to 360°.

Said head 3 is substantially formed by a surface 5 integral with the bearing ring 4 and arranged perpendicularly with respect to the direction X of feeding of the workpiece 10 which is to be machined; said surface 5 has mounted on it a slide 6a movable horizontally in relation thereto (with reference to the example of Figure 1) on guides 6b integral with the surface 5 itself; said slide 6a has perpendicularly fixed to it a second arm 6 carrying an arm 7 at one end of which the working tool or tools 8 is/are fixed and which in turn is movable in the vertical and longitudinal direction with respect to the second arm 6.

All the connections between said surface 5 and arms 6, 7 are realized using means known to the person skilled in the art so as to allow the associated movements with respect to one another and are therefore only schematically shown and not described in detail.

As can be seen from Figure 2, the machine is completed by a fixed auxiliary base 9 which has sliding on it a slide 9a for supporting and feeding the section 10 towards the tool 8; said section, during its feeding movement, passes through both the bearing ring 4 and the support 2 via corresponding openings 4a and 2a formed in said bearing ring and support.

As can be seen from the figures, once a set of three Cartesian axes X, Y, Z has been defined, with the X axis coinciding with or parallel to the horizontal direction of feeding of the bar, the Y axis coinciding with the longitudinal axis of the tool 8, and the Z axis perpendicular to the other two axes and parallel to the longitudinal axis S-S of the said guides 6b, it is always possible, owing to the bearing ring 4 supporting the head 3, to orient the tool itself in a direction perpendicular to the surface to be machined, whatever the spatial inclination of the latter with respect to the said feeding direction and simultaneously and automatically rotate the surface 5 so that the longitudinal axis S-S of the guides 6b is also parallel to, even if not coplanar with the surface to be machined.

As a result of this double orientation it is therefore possible to obtain direct correspondence, making allowance, where necessary, for the positioning value of the workpiece with respect to the absolute zero of the machine, between the design values and the working values on the machine without the need for complicated manual or automatic calculation procedures.

Many variants may be introduced as regards realization of the parts which make up the invention, without thereby departing from the protective scope of the present patent as defined in the claims which follow; in particular, it is possible for the head support surface to be limited to a circular segment mounted on the said bearing ring 4.

## Claims

1. Machine tool (1) for performing machining operation on workpieces (10) of undefined length such as sections, bars and the like, comprising a fixed support (2) having mounted on it the working head (3) which consists of a surface (5) perpendicular to the direction (X) of feeding of the workpiece, on said surface being located guides (6b) on which means (6a) are dispaceable, an arm (7) carring the tool (8),
said working head being rotationally connected to the support (2) by means of an element (4) which are rotatable by associated actuating means, said element (4) for rotationally connecting the head (3) and said support (2) being provided moreover with associated openings (4a, 2a) for passage of the workpiece (10) itself, fed towards the working head (3) by associated translating means (9a, 9) acting in the said feeding direction (X),
characterized in that
- a second arm (6) is perpendicularly mounted on said displaceable means (6a),
- said arm (7) carring the tool (8) is perpendicularly mounted on said second arm (6) and movable with respect thereto along both directions parallel and perpendicular to the feeding direction (X),
- the element (4) is rotatable by 360° around the feeding direction (X),
said combination allowing simultaneous and automatic orientation of the longitudinal axis (Y) of the tool (8) and the axis (S-S) of the said guides (6b) of the second movable arm (6) respectively in the directions perpendicular and parallel to the surface to be machined, whatever the inclination of the latter with respect to the direction of feeding of the workpiece.

2. Machine according to Claim 1, characterized in that said element for connecting the head (3) and the base (2) is a bearing ring (4) which is internally hollow so as to form an opening (4a) for passage of the workpiece (10) during feeding thereof.

3. Machine according to Claim 1, characterized in that said means for feeding the workpiece towards the tool (8) consist of a motor-driven slide (9a) able to perform a translatory movement on a base (9) in the said direction (X) of feeding of the workpiece.

4. Machine according to Claim 1, characterized in that said openings (4a, 2a) of the bearing ring (4) and support (2) have their axis parallel to the direction (X) of feeding of the workpiece.

5. Machine according to Claim 1, characterized in that said direction (X) of feeding of the workpiece (10) is horizontal.

6. Machine according to Claim 1, characterized in that said element connecting the head and base (2) is an angular segment having a suitable centre angle.

## Patentansprüche

1. Werkzeugmaschine (1) für die Ausführung von Bearbeitungsvorgängen an Werkstücken (10) von unbegrenzter Länge wie Profilen, Leisten und dergl., mit einem starren Ständer (2), der einen auf sich befestigten Bearbeitungskopf (3) hat, welcher aus einer Fläche (5) senkrecht zur Richtung (X) des Vorschubes des Werkstückes, auf dieser Fläche befindlichen Führungskörpern (6b), auf denen Hilfsmittel (6a) verschiebbar sind, und aus einem ein Werkzeug (8) tragenden Arm (7) besteht, wobei dieser Bearbeitungskopf mittels eines Elementes (4) drehbar mit dem Ständer (2) verbunden ist, welches durch zugehörige Betätigungsmittel drehbar ist, wobei dieses Element (4) für die drehbare Verbindung von Kopf (3) und dem Ständer (2) ferner mit zugehörigen Öffnungen (4a, 2a) für den Durchgang des Werkstückes (10) selbst ausgestattet ist, welches auf den Bearbeitungskopf (3) durch zugehörige Vorschubmittel (9a, 9) vorgeschoben wird, die in diese Vorschubrichtung (X) arbeiten,
dadurch gekennzeichnet, daß
- ein zweiter Arm (6) orthogonal an den verschiebbaren Mitteln (6a) befestigt ist,
- der das Werkzeug (8) tragende Arm (7) orthogonal mit diesem zweiten Arm (6) verbunden und beweglich bezüglich dazu entlang beider Richtungen ist, parallel und senkrecht zu der Vorschubrichtung (X),
- das Element (4) um 360° drehbar ist um die Vorschubrichtung (X),
- diese Kombination eine gleichzeitige und automatische Ausrichtung der Längsachse (Y) des Werkzeuges (8) bzw. der Achse (S-S) der Führungskörper (6b) des zweiten beweglichen Armes (6) in die Richtungen orthogonal und parallel zu der Fläche, die zu bearbeiten ist, gestattet, bei welchem Neigungswinkel der letztgenannten in bezug auf die Werkstückvorschubrichtung auch immer.

2. Maschine nach Anspruch 1, dadurch gekennzeichnet, daß das Element für die Verbindung des Kopfes (3) und des Unterbaus (2) ein Gleitring (4) ist, der im Inneren hohl ist, so daß er eine Öffnung (4a) für den Durchgang des Werkstückes (10) während dessen Vorschubs bildet.

3. Maschine nach Anspruch 1, dadurch gekennzeichnet, daß die Mittel zum Vorschieben des Werkstückes auf das Werkzeug (8) aus einem motorgetriebenen Führungsschlitten (9a) bestehen, der auf dem Unterbau (9) eine translatorische Bewegung in die Richtung (X) des Vorschubs des Werkstückes ausführen kann.

4. Maschine nach Anspruch 1, dadurch gekennzeichnet, daß die Öffnungen (4a, 2a) des Gleitringes (4) und des Ständers (2) ihre Achsen bezüglich der Richtung (X) des Vorschubs des Werkstückes parallel haben.

5. Maschine nach Anspruch 1, dadurch gekennzeichnet, daß die Richtung (X) des Vorschubs des Werkstückes (10) horizontal ist.

6. Maschine nach Anspruch 1, dadurch gekennzeichnet, daß das den Kopf und den Unterbau (2) verbindende Element ein Winkel-Segment mit einem geeigneten Mittelpunkts-Winkel ist.

## Revendications

1. Machine-outil (1) destinée à effectuer une opération d'usinage sur des pièces à usiner (10) de longueur indéfinie telles que tronçons, barres et similaires, comprenant un support fixe (2) sur lequel est monté la tête de manoeuvre (3) qui est constituée d'une surface (5) perpendiculaire à la direction (X) d'amenée de la pièce, sur ladite surface étant placées des glissières de guidage (6b) sur lesquelles des moyens (6a) sont déplaçables, d'un bras (7) portant l'outil (8), ladite tête de manoeuvre étant raccordée rotativement au support (2) au moyen d'un élément (4) qui est rotatif grâce à des moyens de manoeuvre associés, ledit élément (4) pour relier rotativement la tête (3) et ledit support (2) étant muni de plus d'ouvertures associées (4a, 2a) pour le passage de la pièce à usiner (10) elle-même, amenée vers la tête de manoeuvre (3) par des moyens de translation associés (9a. 9) agissant dans ladite direction d'amenée (X),
***caractérisée en ce que***
- un second bras (6) est monté perpendiculairement sur lesdits moyens déplaçables (6a),
- ledit bras (7) portant l'outil (8) est monté perpendiculaire sur ledit second bras (6) et mobile par rapport à celui-ci sur deux directions, l'une parallèle et l'autre perpendiculaire à la direction d'amenée (X),
- l'élément (4) est rotatif sur 360° autour de la direction d'amenée (X)
ladite combinaison permettant l'orientation simultanée et automatique de l'axe longitudinal (Y) de l'outil (8) et l'axe (S-S) desdites glissières de guidage (6b) du second bras mobile (6) respectivement dans les directions perpendiculaire et parallèle à la surface à usiner, quelle que soit l'inclinaison de cette dernière par rapport à la direction d'amenée de la pièce à usiner.

2. Machine selon la Revendication 1, ***caractérisée en ce que*** ledit élément pour raccorder la tête (3) et la base (2) est une couronne d'appui (4) qui est creuse intérieurement afin de former une ouverture (4a) pour le passage de la pièce à usiner (10) pendant l'amenée de celle-ci.

3. Machine selon la Revendication 1, ***caractérisée en ce que*** lesdits moyens pour amener la pièce à usiner vers l'outil (8) sont constitués par une coulisse (9a) entraînée par un moteur et apte à effectuer un mouvement de translation sur une base (9) dans ladite direction (X) d'amenée de la pièce à usiner.

4. Machine selon la Revendication 1, ***caractérisée en ce que*** lesdites ouvertures (4a, 2a) de la couronne d'appui (4) et du support (2) ont leur axe parallèle à la direction (X) d'amenée de la pièce à usiner.

5. Machine selon la Revendication 1, ***caractérisée en ce que*** ladite direction (X) d'amenée de la pièce à usiner (10) est horizontale.

6. Machine selon la Revendication 1, ***caractérisée en ce que*** ledit élément raccordant la tête et la base (2) est un segment angulaire ayant un angle central approprié.
